# FASCICULE DE BREVET EUROPEEN

(11) **EP 0 560 002 B1**
(45) Date de publication et mention de la délivrance du brevet: **08.01.1997**
(21) Numéro de dépôt: 92870041.8
(22) Date de dépôt: 11.03.1992
(51) Int. Cl.: A23B 4/052

(54) **Générateur de fumée pour la cuisine et la grande cuisine**
Raucherzeuger für Küche und Grossküche
Smoke generator for kitchen and large kitchen

(43) Date de publication de la demande: 15.09.1993
(73) Titulaire: C.A.D.S., b.v.b.a., 2000 Antwerpen (BE)
(72) Inventeur: Vanluchene, André, B-2020 Antwerpen (BE)
(74) Mandataire: Donné, Eddy

(56) Documents cités:
- AU-A- 57 145
- DE-A- 2 240 214
- US-A- 4 270 464
- US-A- 4 374 489
- US-A- 4 474 107

## Description

La présente invention a trait à un générateur de fumée pour la cuisine et la grande cuisine.

Plus spécialement elle est relative à un générateur de fumée destiné à fumer du poisson, de la viande et similaires qui est particulièrement approprié au secteur de l'hôtellerie, de la restauration et des cafés.

Des générateurs de fumée destinés à fumer des comestibles au niveau industriel sont déjà connus, e.a. des documents US 4.270.464 et DE 2.240.214. Le désavantage de ces générateurs est cependant qu'ils sont encombrants, compliqués et qu'ils ont un prix d'achat élevé. Ils ne sont de toute façon pas appropriés à l'application dans des cuisines et des grandes cuisines.

Des dispositifs plus petits pour des restaurants et d'autres sont également connus, e.a. du document US 4.474.107 Ces dispositifs consistent en un espace de chargement dans lequel un plat ou similaires peuvent être posés, où un espace est prévu qui peut être rempli de charbon de bois brûlant sur lequel le produit à brûler destiné à la production de la fumée peut être placé.

Encore d'autres dispositifs ont été décrits dans les documents AU 57.145 et US 4.374.489.

La présente invention est relative à un générateur de fumée où les problèmes susdits sont exclus.

L'invention a encore pour but d'offrir un générateur de fumée pouvant coopérer avec un espace quelconque, comme un espace de four existant, afin de fumer un produit y présent.

A cet effet l'invention est relative à un générateur de fumée pour la cuisine et la grande cuisine, constitué par un fumoir; un élément de chauffage dans ce fumoir; des moyens destinés à amener le produit à brûler jusqu'à l'élément de chauffage; des moyens d'évacuation destinés à faire échapper la fumée générée du fumoir; et des moyens destinés à mettre en marche l'élément de chauffage durant au moins une période déterminée, caractérisé en ce que les moyens d'évacuation pour évacuer la fumée générée comprennent au moins une pièce de raccordement en forme d'un adapteur qui permet d'introduire la fumée via la fermeture d'une porte dans un four ou similaire.

Dans une autre forme d'exécution les moyens d'évacuation pour évacuer la fumée générée comprennent au moins un tuyau de raccordement flexible.

Dans la forme la plus préférée lesdits moyens d'évacuation consistent au moins dans la combinaison de ladite pièce de raccordement avec ledit tuyau de raccordement flexible.

De préférence, l'ensemble est placé dans une enveloppe qui peut être déplacée, de la grandeur d'un appareil ménager.

Dans le but de mieux faire ressortir les caractéristiques suivant l'invention, ci-après à titre illustratif et non restrictif, une réalisation préférentielle est décrite avec référence aux dessins en annexe, dans lesquels :
la figure 1 représente un générateur de fumée suivant l'invention en perspective;
la figure 2 représente une vue suivant la flèche F2 dans la figure 1;
la figure 3 représente une coupe suivant la ligne III-III dans la figure 2;
la figure 4 représente le schéma de câblage électrique du générateur de fumée;
les figures 5 et 6 représentent une variante de l'invention;
la figure 7 représente une vue suivant la flèche F7 dans la figure 5, le générateur de fumée étant ouvert;
la figure 8 représente une coupe suivant la ligne VIII-VIII dans la figure 7;
la figure 9 représente en perspective et en condition démontée la partie représentée dans la figure 8;
la figure 10 représente une coupe suivant la ligne X-X dans la figure 7;
la figure 11 représente le schéma de câblage électrique du générateur de fumée des figures 5 et 6;
la figure 12 représente un raccord destiné à raccorder le générateur de fumée à un four ou similaires;
la figure 13 représente une coupe suivant la ligne XIII-XIII dans la figure 12;
la figure 14 représente le raccord de la figure 12 appliqué dans un four;
la figure 15 représente un autre raccord;
la figure 16 représente le raccord de la figure 15 appliqué dans un four;
la figure 17 clarifie l'utilisation des raccords précités;
la figure 18 représente une autre partie du générateur de fumée, pour une variante.

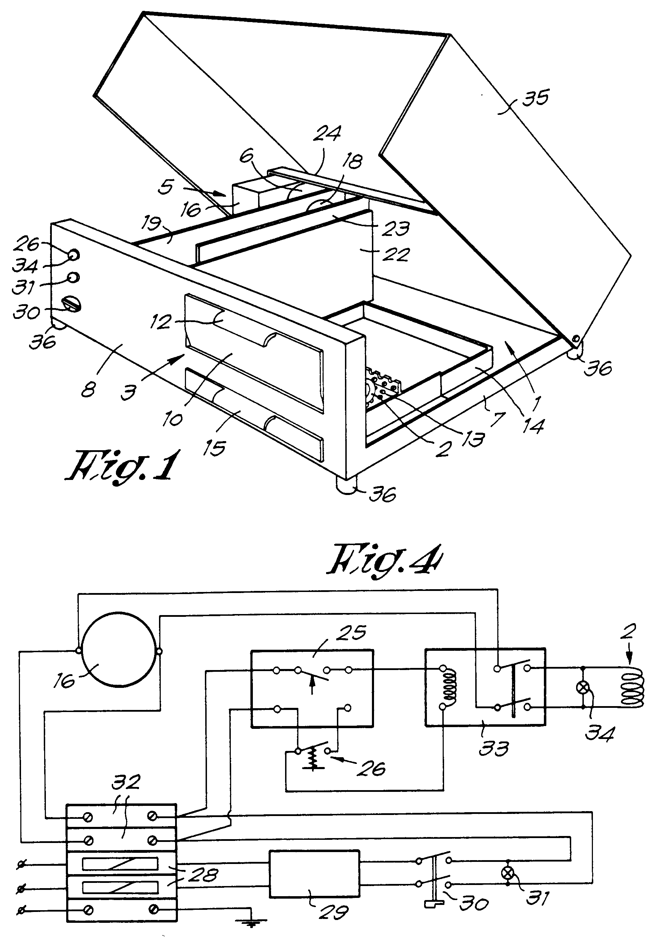

Comme indiqué dans les figures 1 à 3 le générateur de fumée suivant l'invention comprend un fumoir 1, un élément de chauffage 2, des moyens 3 destinés à amener le produit à brûler 4, des moyens d'évacuation 5 destinés à faire échapper la fumée générée du fumoir 1 par une sortie 6 et des moyens destinés à mettre en marche l'élément de chauffage 2 durant au moins une période déterminée.

L'ensemble est placé dans une enveloppe 7 qui peut être déplacée, de préférence en métal comme par exemple l'acier inoxydable 18/10, de la grandeur d'un appareil ménager. Dans la réalisation la plus pratique l'enveloppe 7 mesure environ 40 x 30 x 15 cm.

L'élément de chauffage 2 susdit consiste en une résistance électrique en U qui s'étend suivant un plan horizontal dans le fumoir 1.

Les moyens 3 destinés à amener le produit à brûler 4 consistent en une ouverture 9 dans la face avant 8 de l'enveloppe 7, qui est fermée, comme indiqué dans les figures 1 et 3, au moyen d'un volet 10 pivotant autour d'un axe horizontal. Le volet 10 présente un bord inférieur, à l'intérieur, un plan incliné ou arrondi 11, pour où le produit amené 4 peut glisser jusqu'à l'élément de chauffage 2. Le bord inférieur se situe alors juste au-dessus de cet élément de chauffage 2.

De préférence le volet 10 est suspendu et/ou alourdi de manière qu'il se ferme automatiquement à cause de son propre poids. Il s'ouvre au moyen d'une poignée 12.

Au-dessous de l'élément de chauffage 2 se situe une grille 13, qui consiste de préférence en une plaque perforée aux bords courbés, ceci comme indiqué dans les figures 2 et 3. Au-dessous de la grille 13 un cendrier 14 coulissant est prévu, destiné à recueillir les cendres du produit brûlé 4. De préférence le cendrier 14 s'étend sur une plus grande distance que la grille 13, afin que le produit 4 tombant à côté de la grille 13, par exemple par suite du courant d'air, tombe également là-dedans.

Le cendrier 14 est également muni d'une poignée 15.

Les moyens d'évacuation 5 destinés à faire échapper la fumée générée du fumoir 1 consistent en un turboventilateur 17 actionné par un moteur électrique 16 qui souffle la fumée vers la sortie 6 par une ouverture 18 dans la paroi 19 du fumoir 1. Ces moyens d'évacuation 5 comprennent également un tuyau de raccordement 20 flexible dont une extrémité est raccordée à la sortie 6 et dont l'autre extrémité est munie d'une pièce de raccordement 21 en métal qui peut être montée dans la paroi d'un espace existant, comme un four. La pièce de raccordement 21 est réalisée en acier inoxydable 18/10, de manière qu'elle soit résistante aux détergents.

Dans le fumoir 1 un certain nombre de cloisons ont été placées constituant un labyrinthe, par lequel la fumée doit passer afin d'atteindre l'ouverture 18. A cet effet de préférence deux cloisons 22 et 23 sont utilisées, où la première cloison 22 s'étend de la face avant 8 jusqu'à brève distance de la face arrière 24, tandis que la deuxième cloison 23 s'étend à partir de la face arrière 14 jusqu'à brève distance de la face avant 8. La cloison 22 se situe à côté de l'élément de chauffage 2. La cloison 23 se situe entre la première cloison 22 et la paroi 19, ceci comme indiqué dans la figure 2.

Les moyens destinés à mettre en marche l'élément de chauffage 2 durant au moins une période déterminée sont de préférence constitués par une minuterie 25 qui peut être actionnée par un bouton-pressoir 26 et un montage électromagnétique.

Le schéma électrique complèt est représenté dans la figure 4. Le raccordement au réseau se fait par un fil avec fiche 27. Le circuit est composé d'un certain nombre de fusibles 28, d'une protection thermostatique 29, d'un interrupteur bipolaire 30, d'une lampe témoin 31 montée dans la face avant 8 et de bornes 32 auxquelles le moteur 16 du ventilateur 17 et la minuterie 25 sont raccordés. L'élément de chauffage 2 est également alimenté à partir des bornes 32, ceci au moyen d'un relais 33 actionné par la minuterie 25. Une deuxième lampe témoin 34, montée de préférence dans le bouton-pressoir 26, signale que le relais 33 a été actionné et que la résistance électrique a été mise en circuit.

Il est clair que l'enveloppe 7 peut de préférence être ouverte, par exemple au moyen d'un couvercle pivotant 35, comme indiqué dans la figure 1. L'enveloppe 7 est placée sur des pieds 36 en matière synthétique afin d'éviter que la surface du support sur lequel le générateur de fumée est posé, soit brûlée.

Le fonctionnement du dispositif se déduit facilement des figures. Une petite quantité du produit 4 susdit, généralement constitué de sciure de chêne ou de hêtre, est posée sur la face intérieure du volet 10, ayant pour conséquence que celle-ci tombe sur l'élément de chauffage 2 en fermant le volet 10. Ensuite l'interrupteur 30 est fermé, ayant pour conséquence que le ventilateur 17 commence déjà à fonctionner. Par la suite le bouton-pressoir 26 est pressé, ce qui fait que l'élément de chauffage 2 est mis en marche par le relais 33 et la minuterie 25 durant une certaine période, suffisamment longtemps afin que la sciure prenne feu. Cette période comprend généralement environ quatre minutes et elle est réglable par la minuterie 25. Le fait que l'élément de chauffage 2 est mis en marche, est visible au moyen de la lampe témoin 34.

Une fois allumée, la sciure continue à couver spontanément, faisant apparaître de la fumée qui est aspirée par le labyrinthe et le ventilateur 17 et menée par le tuyau 20 dans un espace non indiqué, qui peut être de n'importe quelle nature, et dans lequel se trouvent les comestibles à fumer. L'avantage du labyrinthe est que la fumée refroidit, ceci est important en cas de fumage de produits qui ne peuvent pas chauffer durant ce processus. De cette façon le générateur de fumée peut être appliqué pour le fumage froid et chaud. Dans le dernier cas, la fumée refroidie est amenée dans un espace chauffé, par exemple un four.

La combustion peut être réglée en admettant plus ou moins d'air en laissant le cendrier 14 oui ou non entrouvert.

En cas d'une trop grande production de chaleur le raccordement au réseau est interrompu par la protection thermostatique 29. De préférence cette protection 29 est réglée à une température d'environ 60 degrés Celcius.

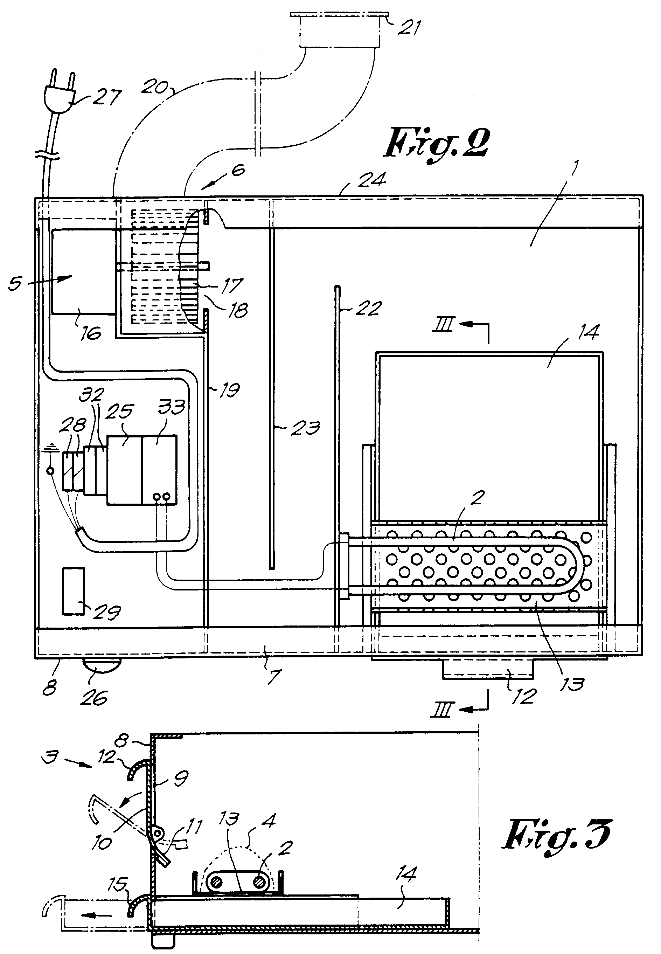

Dans les figures 5 à 11 une variante du générateur de fumée précité est représentée, qui a un nombre de possibilités additionnelles et qui est un peu plus grand.

Comme représenté dans les figures 5 et 6, ce générateur de fumée est logé dans une enveloppe 37 qui est déplaçable au moyen de roulettes 38.

Comme représenté dans la figure 7, la spécialité de ce générateur de fumée existe en le fait que les moyens 3 pour amener le produit 4 à brûler sont pourvus d'un silo 39 et un obturateur 40 qui est appliqué en-dessous de ce silo, de sorte que le générateur de fumée puisse marcher autonomement pour une période relativement longue. Le silo 39 est formé en entonnoir et peut être rempli de sciure ou similaires à travers un couvercle 41 dans la paroi supérieure de l'enveloppe 37.

L'obturateur 40 précité permet qu'aux moments désirés une certaine quantité du produit 4 est menée sur l'élément de chauffage 2.

Comme représenté dans les figures 8 et 9, l'obturateur 40 existe de préférence en une vanne 42 qui est pourvue d'ouvertures 43, et qui est déplaçable sous la plaque de fond 45, pourvue d'ouvertures 44, du silo 39. Les ouvertures 43 et 44 sont placées d'une telle façon que, en déplaçant la vanne 42, un passage ou bien une obturation complète est obtenu. La vanne 42 peut être déplacée au moyen de moyens de commande, comme un électro-aimant 46. En mettant cet électro-aimant 46 sous tension, la vanne 42 se positionne comme représenté dans la figure 8, de sorte que l'obturateur 40 soit ouvert. Si la tension est supprimée, l'obturateur 40 est fermé par le fait que la vanne 42 est tirée vers la gauche au moyen d'un ressort de recul 47.

Pour obtenir que la sciure ne s'attache pas dans le silo 39, l'obturateur 40 est de préférence pourvu d'un ou plusieurs éléments de dégagement 48, comme des chevilles verticales ou similaires, qui s'étendent jusque dans le silo 39 et qui sont déplaçables avec la vanne 42. La construction spécifique de ceci est clarifiée dans la vue démontée dans la figure 9.

Comme représenté dans la figure 7, la grille 13 est montée en biais sous l'ouverture de déchargement ou sortie du silo 39 et le produit 4 est amené de l'ouverture de déchargement vers la grille 13 au moyen d'un guide en talus 49. Le fait que la grille 13 et l'élément de chauffage 2 ne se trouvent pas verticalement sous l'ouverture de déchargement, offre l'avantage qui le risque de feu dans le silo 39 est presque exclu dans le cas où le produit 4 sur la grille 13 flamboyerait.

Comme représenté dans la figure 5, le générateur de fumée est divisé, au moyen d'une cloison imperméable 50, en deux compartiments 51 et 52, dont le premier contient les components mécaniques pour réaliser le fumage, et le deuxième est pourvu d'un nombre de components électriques qui seront décrits ci-après. La cloison imperméable 50 offre l'avantage que le compartiment 51 peut être nettoyé avec un fluide comme de l'eau, par exemple rincé, sans aucun risque d'abimer les components électriques.

Les deux compartiments 51 et 52 sont fermés au moyen de panneaux démontables 53 et 54.

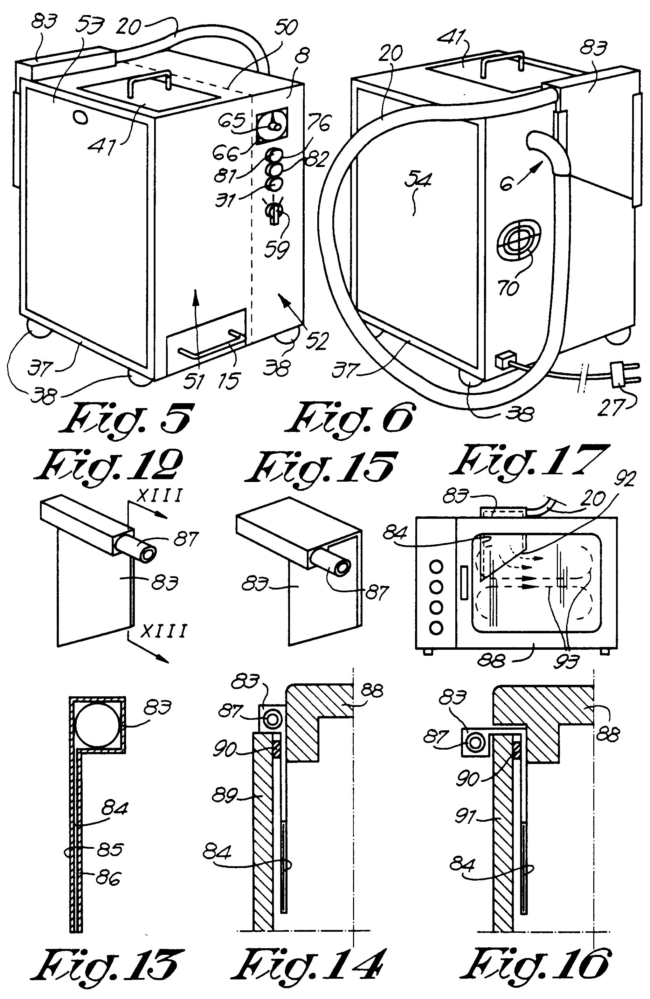

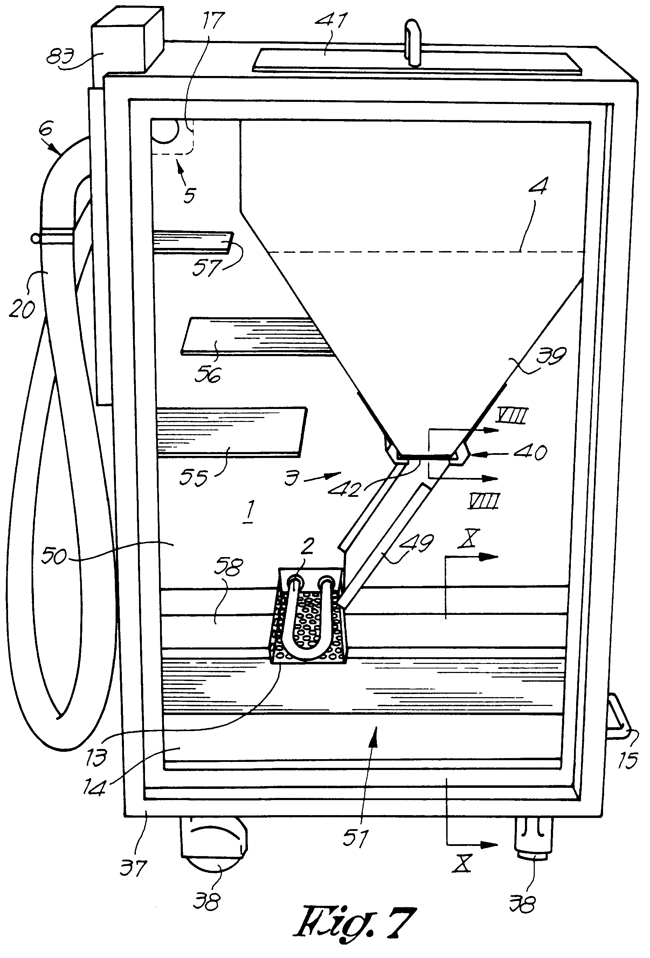

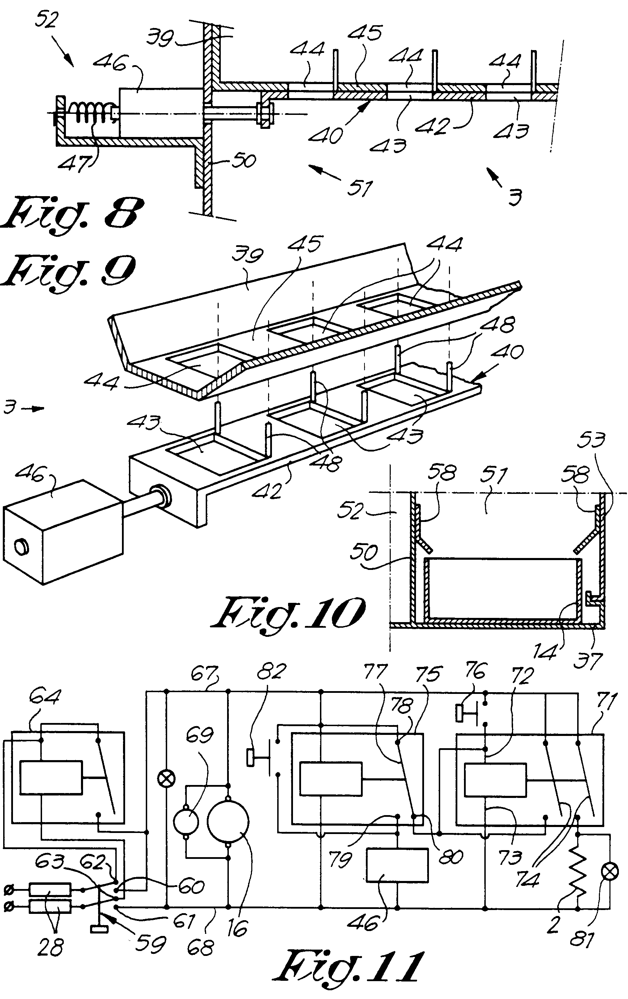

Analoguement à la première forme d'exécution, le générateur de fumée est pourvu d'un labyrinthe formé par des cloisons 55, 56 et 57; un ventilateur 17; un tuyau de raccordement 20 flexible et un cendrier 14. Afin d'éviter que les cendres tombent à côté du cendrier 14, des profiles conducteurs 58 peuvent être appliqués contre la cloison 50 et le panneau 53, comme représenté dans la figure 10.

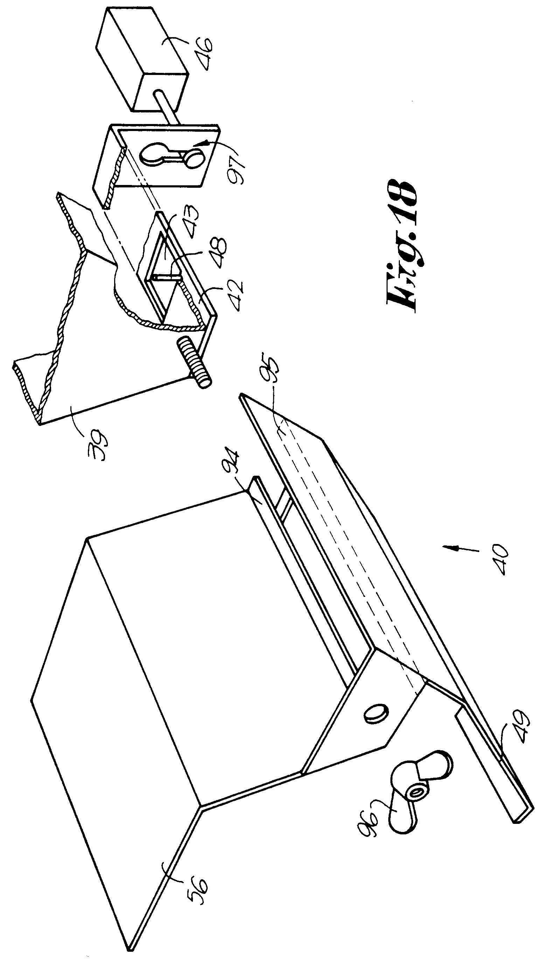

Le générateur de fumée des figures 5 à 10 est de préférence muni d'un circuit électrique comme représenté dans la figure 11. Le raccordement au réseau se fait par un fil avec fiche 27. La tension est passée par des fusibles 28 à un interrupteur 59 qui peut être placé en trois positions. En la première position un service manuel est prévu et la tension du réseau est passée aux bornes 60 et 61. Dans la seconde position le circuit électrique est débranché du réseau. Dans la troisième position un service automatique est prévu et la tension du réseau est passée aux bornes 62 et 63.

Dans la troisième position précitée le circuit est alimenté via une minuterie 64 qui peut être mise en circuit au moyen d'un bouton régulateur 65. Comme représenté dans la figure 5, à côté de ce bouton régulateur 65 un deuxième bouton régulateur 66 est prévu pour mettre au point l'échelle de réglage. Les différentes échelles de réglage sont par exemple 0-3 sec, 0-30 sec, 0-3 min, 0-30 min, 0-3 heures et 0-30 heures.

Quand les conducteurs 67 et 68 sont mis sous tension, le moteur 16 commence à marcher et la lampe témoin 31 s'allume. De même, un deuxième moteur 69 est démarré qui pourvoit à l'impulsion d'un ventilateur 70 représenté dans la figure 6, qui refroidit le compartiment avec les components électriques.

L'élément de chauffage 2 est commandé au moyen d'une minuterie 71 qui prévoit à ce que, après le branchement d'une tension par les bornes 72 et 73, les éléments commutateurs 74 restent fermés durant une période déterminée, de sorte que l'élément de chauffage 2 soit branché durant une période déterminée. Après l'écoulement de ladite période, les éléments commutateurs 74 s'ouvrent, si une tension est encore présente sur les bornes 72 et 73 oui ou non. Les éléments commutateurs 74 peuvent être rebranchés après que la tension sur les bornes 72 et 73 ait été zéro. La minuterie 71 est similaire à la minuterie 25 de la figure 4.

La minuterie 71 peut être mise sous tension au moyen d'un interrupteur d'intervalle 75 ou un bouton-pressoir 76. L'interrupteur d'intervalle 75 montre un élément commutateur 77 qui peut être placé en deux positions. Cet interrupteur d'intervalle 75 fait de préférence un contact bref entre les bornes 78 et 79, par exemple durant deux secondes, et durant une période plus longue entre les bornes 78 et 80, par exemple treize minutes. Durant la brève période, l'électro-aimant 46 de l'obturateur 40 est mis sous tension, de sorte qu'une quantité de sciure du silo 39 soit déposée sur l'élément de chauffage 2. Durant la période plus longue, la minuterie 71 est mise sous tension, de sorte que l'élément de chauffage 2 soit mis sous tension durant une brève période au début de cette période, par exemple 4 à 7 minutes. La mise sous tension est visualisée au moyen d'une lampe témoin 81 qui est incorporée dans le bouton-pressoir 76.

L'obturateur 40 peut être opéré manuellement au moyen d'un bouton-pressoir 82.

Le fonctionnement du générateur de fumée des figures 5 à 10 peut être déduit facilement des figures et de la description précédente.

Comme représenté dans les figures 5 et 6, le générateur de fumée est pourvu d'une pièce de raccordement 83 qui est réalisée dans la forme d'un adapteur qui permet la communication de la fumée produite à un four ou similaires via la fermeture de la porte de ce dernier. Comme représenté dans les figures 12 et 13, cette pièce de raccordement 83 existe à cette fin en un canal 84 avec une coupe transversale oblongue, qui est formé de deux plaques parallèles 85 et 86 qui sont attachées l'une à l'autre le long de leurs côtés. La pièce de raccordement 83 montre d'ailleurs une partie de raccordement 87 avec laquelle elle est raccordée au tuyau de raccordement 20. La figure 14 représente de quelle façon la pièce de raccordement 83 est placée dans un four 88. Le canal 84 est serré entre la porte 89 et la paroi du four 88, lors de quoi la fermeture 90 est localement enfoncée un peu plus que normalement.

La figure 14 représente la forme de la pièce de raccordement 83 pour un four 88 avec une porte élevée 89. Les figures 15 et 16 représentent une forme adaptée pour une porte incorporée 91.

Comme représenté dans les figures 12, 15 et 17, la pièce de raccordement 83 présente de préférence une extrémité biseautée 92, de préférence sous 45 degrés, de sorte que la pièce de raccordement 83 puisse toujours être introduite dans un four 88 d'une telle manière que la fumée est pour ainsi dire aspirée du canal 84 au moyen du courant d'air 93 dans le four 88.

Il est clair que le générateur de fumée de la figure 1 peut aussi être muni de la pièce de raccordement 83.

Il est clair que le fumoir 1 peut être très petit.

Dans la figure 18 une autre variante de l'obturateur 40 est représentée en condition démontée. La particularité en est que l'obturateur peut être démonté sans besoin d'outils. Ceci permet le nettoyage de l'obturateur à des moments réguliers. De cette façon, il est évité que l'obturateur se bloque après un certain temps à cause de produits qui se déposent de la fumée générée et qui sèchent dans l'obturateur.

A cet effet, la vanne 42 est supportée par des guides 94 et 95 qui peuvent être défaits et enlevés facilement au moyen d'un écrou à ailettes 96 ou similaires. La vanne 42 peut alors être démontée parce qu'elle est couplée à l'électro-aimant au moyen d'un accouplement démontable par coulissement 97.

Les guides 94 et 95 peuvent former un tout avec la cloison 56 et le guide 49.

La présente invention n'est nullement limitée aux réalisations décrites à titre d'exemple et représentées dans les figures, mais un tel générateur de fumée peut être réalisé en toutes sortes de formes et dimensions.

## Revendications

1. Générateur de fumée pour la cuisine et la grande cuisine, constitué par un fumoir (1); un élément de chauffage (2) dans le fumoir (1); des moyens (3) destinés à amener le produit à brûler (4) jusqu'à l'élément de chauffage (2); des moyens d'évacuation (5) destinés à faire échapper la fumée générée du fumoir (1); et des moyens destinés à mettre en marche l'élément de chauffage (2) durant au moins une période déterminée, caractérisé en ce que les moyens d'évacuation (5) pour évacuer la fumée générée comprennent au moins une pièce de raccordement (83) en forme d'un adapteur qui permet d'introduire la fumée via la fermeture (90) d'une porte (89,91) dans un four (88).

2. Générateur de fumée suivant la revendication 1, caractérisé en ce que la pièce de raccordement (83) présente un canal (84) qui est formé par deux plaques parallèles (85,86) qui sont reliées l'une à l'autre le long de leurs côtés.

3. Générateur de fumée suivant la revendication 1 ou 2, caractérisé en ce que la pièce de raccordement (83) présente une extrémité biseautée (92).

4. Générateur de fumée suivant la revendication 1, caractérisé en ce que les moyens d'évacuation (5) comprennent également un tuyau de raccordement (20) flexible, ladite pièce de raccordement (83) étant pourvue au bout de ce tuyau.

5. Générateur de fumée suivant l'une des revendications précédentes, caractérisé en ce que l'ensemble est placé dans une enveloppe (7, 37) qui peut être déplacée.

6. Générateur de fumée suivant l'une des revendications précédentes, caractérisé en ce que l'élément de chauffage (2) existe en une résistance de chauffage électrique.

7. Générateur de fumée suivant l'une des revendications précédentes, caractérisé en ce qu'une grille (13) se situe sous l'élément de chauffage (2).

8. Générateur de fumée suivant la revendication 7, caractérisé en ce que la grille (13) consiste en un plaque perforée aux bords courbés.

9. Générateur de fumée suivant l'une des revendications précédentes, caractérisé en ce que les moyens (3) destinés à amener le produit (4) à brûler consistent en un volet (10) pivotant autour d'un axe horizontal par où le produit (4) peut être mené dans le fumoir (1) quand ce volet (10) est en position ouverte, et peut glisser jusqu'à l'élément de chauffage (2).

10. Générateur de fumée suivant l'une des revendications de 1 à 8, caractérisé en ce que les moyens (3) destinés à amener le produit (4) à brûler existent en un silo (39) et un obturateur (40) coopérant avec ce silo (39).

11. Générateur de fumée suivant la revendication 10, caractérisé en ce que l'élément de chauffage (2) est monté en biais sous la sortie du silo (39) et qu'entre la sortie et l'élément de chauffage (2) un guide (49) est pourvu pour amener le produit (4) à l'élément de chauffage (2).

12. Générateur de fumée suivant la revendication 10 ou 11, caractérisé en ce que l'obturateur (40) est démontable sans outils.

13. Générateur de fumée suivant la revendication 10, 11 ou 12, caractérisé en ce que l'obturateur (40) est pourvu de moyens de commande , qui existent en un électro-aimant (46) et un ressort de recul (47).

14. Générateur de fumée suivant l'une des revendications de 10 à 13 caractérisé en ce que l'obturateur (40) est pourvu d'au moins un élément de dégagement (48).

15. Générateur de fumée suivant l'une des revendications précédentes, caractérisé en ce que les moyens destinés à mettre en marche l'élément de chauffage (2) durant une période déterminée existent en une minuterie (25) et un bouton-pressoir (26) destiné à actionner cette minuterie (25).

16. Générateur de fumée suivant l'une des revendications de 10 à 14, caractérisé en ce qu'il peut marcher aussi bien manuellement que automatiquement.

17. Générateur de fumée suivant l'une des revendications de 10 à 14, caractérisé en ce qu'il est pourvu d'une minuterie (64) qui est responsable pour le fonctionnement général du générateur de fumée, et d'un interrupteur d'intervalle qui prévoit régulièrement à l'alimentation en produit (4) à brûler.

18. Générateur de fumée suivant l'une des revendications précédentes, caractérisé en ce que la fumée doit quitter le fumoir (1) par un labyrinthe, de sorte qu'elle soit refroidie.

19. Générateur de fumée suivant l'une des revendications précédentes, caractérisé en ce que les moyens d'évacuation (5) précités sont pourvus d'un ventilateur (17).

20. Générateur de fumée suivant l'une des revendications précédentes, caractérisé en ce qu'un cendrier (14) coulissant est prévu au-dessous l'élément de chauffage (2).

## Claims

1. Smoke generator for kitchen and large kitchen, consisting of a smoke chamber (1); a heating element (2) within the smoke chamber (1); means (3) for supplying the product (4) to be burned to the heating element (2); eduction means (5) for the eduction of the generated smoke from the smoke chamber (1); and means for starting the heating element (2) during at least a determined period of time, characterized in that the eduction means (5) for the eduction of the generated smoke comprise at least one connecting piece (83) in the shape of an adapter which allows to introduce the smoke via the closing element (90) of a door (89,91) into an oven (88).

2. Smoke generator according to claim 1, characterized in that the connecting piece (83) comprises a duct (84) which is formed by two parallel plates (85,86) which are connected to each other along their sides.

3. Smoke generator according to claim 1 or 2, characterized in that the connecting piece (83) has an inclined extremity (92).

4. Smoke generator according to claim 1, characterized in that the eduction means (5) also comprise a flexible connection pipe (20), whereby the aforementioned connecting piece (83) is provided at the end of this pipe.

5. Smoke generator according to any of the aforementioned claims, characterized in that the whole is provided in a mobile housing (7,37).

6. Smoke generator according to any of the aforementioned claims, characterized in that the heating element (2) consists of an electric heating resistor.

7. Smoke generator according to any of the aforementioned claims, characterized in that a grate (13) is provided below the heating element (2).

8. Smoke generator according to claim 7, characterized in that the grate (13) consists of a perforated plate with folded edges.

9. Smoke generator according to any of the aforementioned claims, characterized in that the means (3) for the supply of the product (4) to be burned consist of a flap (10) which can swivel around a horizontal axis, by means of which the product (4) can be introduced into the smoke chamber (1) when this flap is in open position, and can slide to the heating element (2).

10. Smoke generator according to any of the claims 1 to 8, characterized in that the means (3) for the supply of the product (4) to be burned consist of a silo (39) and a seal (40) which cooperates with this silo (39).

11. Smoke generator according to claim 10, characterized in that the heating element (2) is mounted in an inclined manner below the outlet of the silo (39) and that between the outlet and the heating element (2) a guidance (49) is provided for the supply of the product (4) to the heating element (2).

12. Smoke generator according to claim 10 or 11, characterized in that the seal (40) can be dismounted without tools.

13. Smoke generator according to claim 10, 11 or 12, characterized in that the seal (40) is provided with drive means consisting of an electromagnet (46) and a readjusting spring (47).

14. Smoke generator according to any of the claims 10 to 13, characterized in that the seal (40) is provided with at least one removal element (48).

15. Smoke generator according to any of the aforementioned claims, characterized in that the means for starting the heating element (2) during a determined period of time consist of a timer (25) and a push-button (26) for starting this timer (25).

16. Smoke generator according to any of the claims 10 to 14, characterized in that it can work manually as well as automatically.

17. Smoke generator according to any of the claims 10 to 14, characterized in that it is provided with a timer (64) which is responsible for the general functioning of the smoke generator, and an interval switch which regularly provides for the supply of the product (4) to be burned.

18. Smoke generator according to any of the aforementioned claims, characterized in that the smoke has to leave the smoke chamber (1) via a labyrinth in order to be cooled.

19. Smoke generator according to any of the aforementioned claims, characterized in that the eduction means (5) are provided with a fan (17).

20. Smoke generator according to any of the aforementioned claims, characterized in that a slidable ash pan (14) is provided below the heating element (2).

## Patentansprüche

1. Raucherzeuger für Küche und Großküche, bestehend aus einer Rauchkammer (1); einem Heizelement (2) in der Rauchkammer (1); Mitteln (3), die zur Zufuhr des zu verbrennenden Produkts (4) zum Heizelement (2) bestimmt sind; Abfuhrmitteln (5), die zur Abfuhr des erzeugten Rauchs aus der Rauchkammer (1) bestimmt sind; und Mitteln, die zum Inbetriebsetzen des Heizelements (2) während zumindest einer festgelegten Zeitspanne bestimmt sind, dadurch gekennzeichnet, daß die Abfuhrmittel (5) zur Abfuhr des erzeugten Rauchs zumindest ein Anschlußstück (83) in Form eines Adapters umfassen, der das Einbringen des Rauchs über das Verschlußelement (90) einer Tür (89,91) in einen Ofen (88) gestattet.

2. Raucherzeuger gemäß Anspruch 1, dadurch gekennzeichnet, daß das Anschlußstück (83) einen Kanal (84) aufweist, der von zwei parallelen Platten (85,86) gebildet wird, die entlang ihren Seiten miteinander verbunden sind.

3. Raucherzeuger gemäß Anspruch 1 oder 2, dadurch gekennzeichnet, daß das Anschlußstück (83) ein abgeschrägtes Ende (92) aufweist.

4. Raucherzeuger gemäß Anspruch 1, dadurch gekennzeichnet, daß die Abfuhrmittel (5) auch eine flexible Anschlußleitung (20) umfassen, wobei besagtes Anschlußstück (83) am Ende dieser Leitung vorgesehen ist.

5. Raucherzeuger gemäß einem der vorgenannten Ansprüche, dadurch gekennzeichnet, daß das Ganze in einem mobilen Gehäuse (7,37) angebracht ist.

6. Raucherzeuger gemäß einem der vorgenannten Ansprüche, dadurch gekennzeichnet, daß das Heizelement (2) aus einem elektrischen Heizwiderstand besteht.

7. Raucherzeuger gemäß einem der vorgenannten Ansprüche, dadurch gekennzeichnet, daß sich ein Rost (13) unter dem Heizelement (2) befindet.

8. Raucherzeuger gemäß Anspruch 7, dadurch gekennzeichnet, daß der Rost (13) aus einer perforierten Platte mit umgebogenen Kanten besteht.

9. Raucherzeuger gemäß einem der vorgenannten Ansprüche, dadurch gekennzeichnet, daß die Mittel (3) zur Zufuhr des zu verbrennenden Produkts (4) aus einer um eine horizontalen Achse schwenkbaren Klappe (10) bestehen, wodurch das Produkt (4) in die Rauchkammer (1) gebracht werden kann, wenn diese Klappe (10) sich in geöffneter Position befindet, und bis zum Heizelement (2) gleiten kann.

10. Raucherzeuger gemäß einem der Ansprüche 1 bis 8, dadurch gekennzeichnet, daß die Mittel (3), die zur Zufuhr des zu verbrennenden Produkts (4) bestimmt sind, aus einem Silo (39) und einem Verschluß (40), der mit diesem Silo (39) zusammenwirkt, bestehen.

11. Raucherzeuger gemäß Anspruch 10, dadurch gekennzeichnet, daß das Heizelement (2) schräg unter dem Auslaß des Silos (39) montiert ist und daß zwischen dem Auslaß und dem Heizelement (2) eine Führung (49) zur Zufuhr des Produkts (4) zum Heizelement (2) vorgesehen ist.

12. Rauchgenerator gemäß Anspruch 10 oder 11, dadurch gekennzeichnet, daß der Verschluß (40) ohne Werkzeuge demontiert werden kann.

13. Raucherzeuger gemäß Anspruch 10, 11 oder 12, dadurch gekennzeichnet, daß der Verschluß (40) mit Antriebsmitteln versehen ist, die aus einem Elektromagneten (46) und einer Rückstellfeder (47) bestehen.

14. Raucherzeuger gemäß einem der Ansprüche 10 bis 13, dadurch gekennzeichnet, daß der Verschluß (40) mit zumindest einem Ablöseelement (48) versehen ist.

15. Raucherzeuger gemäß einem der vorgenannten Ansprüche, dadurch gekennzeichnet, daß die Mittel, die zum Inbetriebsetzen des Heizelements (2) während einer festgelegten Zeitspanne bestimmt sind, aus einer Schaltuhr (25) und einem Drucktaster (26) zum Ingangsetzen dieser Schaltuhr (25) bestehen.

16. Raucherzeuger gemäß einem der Ansprüche 10 bis 14, dadurch gekennzeichnet, daß er sowohl manuell als auch automatisch arbeiten kann.

17. Raucherzeuger gemäß einem der Ansprüche 10 bis 14, dadurch gekennzeichnet, daß er mit einer Schaltuhr (64), die für das allgemeine Funktionieren des Raucherzeugers verantwortlich ist, und einem Intervallschalter, der regelmäßig für die Zufuhr des zu verbrennenden Produkts (4) sorgt, versehen ist.

18. Raucherzeuger gemäß einem der vorgenannten Ansprüche, dadurch gekennzeichnet, daß der Rauch die Rauchkammer (1) über ein Labyrinth verlassen muß, so daß er abgekühlt wird.

19. Raucherzeuger gemäß einem der vorgenannten Ansprüche, dadurch gekennzeichnet, daß die Abfuhrmittel (5) mit einem Ventilator (17) versehen sind.

20. Raucherzeuger gemäß einem der vorgenannten Ansprüche, dadurch gekennzeichnet, daß ein verschiebbarer Aschenkasten (14) unter dem Heizelement (2) vorgesehen ist.
